Europäisches Patentamt

European Patent Office

Office européen des brevets

(19)

(11) Veröffentlichungsnummer: **0 195 231 B1**

# EUROPÄISCHE PATENTSCHRIFT

(12)

(45) Veröffentlichungstag der Patentschrift: **08.05.91**

(51) Int. Cl.⁵: **B29C 45/17, B29C 45/04**

(21) Anmeldenummer: **86101657.4**

(22) Anmeldetag: **10.02.86**

(54) **Formschliesseinheit mit einer Giessformwechselvorrichtung und einem Adaptionstisch zum Vorwärmen von Kunststoff-Spritzgiessformen.**

(30) Priorität: **16.03.85 DE 3509518**

(43) Veröffentlichungstag der Anmeldung:
**24.09.86 Patentblatt 86/39**

(45) Bekanntmachung des Hinweises auf die
Patenterteilung:
**08.05.91 Patentblatt 91/19**

(84) Benannte Vertragsstaaten:
**AT CH DE FR GB IT LI NL**

(56) Entgegenhaltungen:
**EP-A- 0 069 221       EP-A- 0 069 919**
**EP-A- 0 092 685       EP-A- 0 092 686**
**EP-A- 0 111 570       EP-A- 3 323 353**
**DE-A- 2 332 205       DE-A- 3 228 434**
**US-A- 4 005 964       US-A- 4 408 521**

**EUROPEAN PLASTICS NEWS, vol. 9, no. 12,**
**Dezember 1982, Seite 29, London, GB:**
**"Rapid mould changing"**

(73) Patentinhaber: **Hehl, Karl**
**Arthur-Hehl-Strasse 32**
**W-7298 Lossburg 1(DE)**

(72) Erfinder: **Hehl, Karl**
**Arthur-Hehl-Strasse 32**
**W-7298 Lossburg 1(DE)**

(74) Vertreter: **Mayer, Friedrich Dr. et al**
**Westliche 24**
**W-7530 Pforzheim(DE)**

## Beschreibung

Die Erfindung bezieht sich auf eine Formschließeinheit mit zugehöriger Gießformwechselvorrichtung entsprechend dem Oberbegriff des Patentanspruches 1.

Unter "Adaption" im Sinne des Oberbegriffes wird die thermische Anpassung der Spritzgießform an beabsichtigte Betriebsbedingungen verstanden, welche Anpassung außerhalb der Arbeitsposition und in der Regel während des mit einer anderen Spritzgießform fortdauernden Spritzgießbetriebes erfolgt.

Bei einer bekannten Formschließeinheit mit zugehöriger Gießformwechselvorrichtung dieser Art (DE-PS 33 23 353) ist die Versorgungskupplung für eine Spritzgießform ausgelegt, die in vertikaler Richtung, also von oben auf den Adaptionstisch aufgesetzt wird. Dabei wird die vertikale Aufsetzbewegung für die gegenseitige Annäherung der Kupplungsköpfe bzw. -hälften zu deren gegenseitiger Anlage und somit auch für das Ankuppeln der Versorgungsleitungen ausgenutzt. Der maschinenseitige Kupplungskopf ist über eine Kupplungsstange mit dem Adaptionstisch verbunden, die in einer Führung des Adaptionstisches verschiebbar gelagert ist und mit der Spritzgießform in den Formspannraum der Formschließeinheit eingefahren wird. Der formseitige Kupplungskopf ist über ein Verbindungsstück derart mit der auf dem Adaptionstisch stehenden Spritzgießform verbunden, daß er sich stets in gleichem räumlichen Verhältnis zum Adaptionstisch befindet. Dies wird bei unterschiedlich großem Formkörper der Spritzgießform durch ein Verbindungsstück von reziproker Größe erreicht. Dadurch ist sichergestellt, daß bei der vertikalen Aufsetzbewegung der Spritzgießform die Anschlußkupplungen beider Kupplungsköpfe stets in vertikaler Richtung miteinander fluchten.

Es ist auch bekannt, Spritzgießformen mit Anlageplatten zu versehen, welche den quaderförmigen Gießformkörper an beiden Seiten stirnseitig überragen (DE-OS 23 32 205; DE-GM 1 965 313; Europäische Patentanmeldung 0 092 636 A1).

Der Erfindung liegt die Aufgabe zugrunde, ein Formschließeinheit mit zugehöriger Gießformwechselvorrichtung der eingangs genannten Gattung derart weiterzubilden, daß bei geringem technischen Aufwand die baulichen Voraussetzungen für ein automatisches, vom Rechner der Spritzgießmaschine gesteuertes Ankuppeln der Versorgungsleitungen möglich ist, wenn die Spritzgießform horizontal und quer zur Schließrichtung der Formschließeinheit auf den Adaptionstisch eingefahren wird.

Diese Aufgabe wird durch die im Patentanspruch 1 genannten Merkmale gelöst.

Bei einer solchen Ausbildung ergibt sich der zusätzliche Vorteil, daß der untere Eingang zum Formspannraum der Formschließeinheit nicht mehr durch ein am benachbarten Formträger befestigtes Führungslager für die Kupplungsstange eingeschränkt ist. Dadurch wird der Einbau von Sondereinrichtungen erleichtert. Beim Transport der Spritzgießform vom Adaptionstisch in den Formspannraum und während des Spritzgießens, also bei in Arbeitsposition befindlicher Spritzgießform, ist die maschinenseitige Kupplungshälfte je ausschließlich von der formseitigen Kupplungshälfte getragen, so daß während des Transportes und während des Spritzgießens keine weiteren Halteorgane für die maschinenseitige Kupplungshälfte erforderlich sind.

Nach der DE-OS 32 28 434 und der EP 0 069 221 ist es bei einer Formschließeinheit mit einer Gießformwechselvorrichtung, einer Vorwärmstation und Versorgungskupplungen zum Ankuppeln von flexiblen Versorgungsleitungen einer Kunststoff-Spritzgießform an maschinenseitige Versorgungsleitungen bereits bekannt, eine maschinenseitige Kupplungshälfte mit einem aus einer Kolben-Zylinder-Anordnung bestehenden Kupplungsantrieb zu versehen. Die maschinenseitige Kupplungshälfte kann jedoch nicht zwischen der Vorwärmstation und der Formschließeinheit bewegt werden. Vielmehr sind der Vorwärmstation und der Formschließeinheit je eine maschinenseitige, fest angeordnete Kupplungshälfte zugeordnet.

Bei einer Ausgestaltung entsprechend den Patentansprüchen 2-6 wird die Transportbewegung der Spritzgießform beim Einfahren auf den Adaptionstisch in einfacher Weise zur Herstellung einer wechselweisen Hintergriffsverbindung der maschinenseitigen Kupplungshälfte zur formseitigen Kupplungshälfte und zum Adaptionstisch ausgenutzt. Wird die Spritzgießform von rückwärts her auf den Adaptionstisch eingefahren, so ergibt sich dabei eine Hintergriffsverbindung zwischen der am Adaptionstisch gehalterten maschinenseitigen Kupplungshälfte und der formseitigen Kupplungshälfte. Wird die Spritzgießform von vorne her, also vom Formspannraum her, auf den Adaptionstisch eingefahren, so ergibt sich eine Hintergriffsverbindung der maschinenseitigen Kupplungshälfte mit dem Adaptionstisch. Bei der Versorgungskupplung werden die Anschlußkupplungen der maschinenseitigen Kupplungshälfte zur Herstellung der Kupplungsverbindung auf die Anschlußkupplungen der formseitigen Kupplungshälfte aufgefahren. Einem negativen Kupplungsprofil der maschinenseitigen Kupplungshälfte entspricht ein entsprechendes positives Profil der formseitigen Kupplungshälfte.

Bei einer Ausbildung entsprechend dem Patentanspruch 7 können in einer standardisierten Gießformwechselvorrichtung unterschiedlich große Spritzgießformen gewechselt werden, da unterschiedlich große Formkörper mit gleichgroßen, also standardisierten Anlageplatten kombinierbar sind. Durch die Befestigung des gießformseitigen Formkörpers ausschließlich an der Anlageplatte der Spritzgießform ist ein konstantes räumliches Verhältnis zwischen der genannten Kupplungshälfte und dem Adaptionstisch sichergestellt, wenn die Spritzgießform auf dem zugehörigen Stellplatz des Adaptionstisches steht. Eine besonders raumsparende Ausbildung der maschinenseitigen Kupplungshälfte ergibt sich bei einer Ausbildung des Kupplungsantriebes entsprechend den Patentansprüchen 8-12.

Nachstehend wird die Formschließeinheit gemäß der Erfindung anhand der Zeichnung an zwei Ausführungsbeispielen erläutert.

Es zeigen:

| | |
|---|---|
| Fig. 1, 2 | die aufgeschnittene Spritzgießform vor und nach dem Kupplungshub in Seitenansicht (ohne die flexiblen Adaptionsanschlüsse 33'), |
| Fig. 3 | die Spritzgießform gemäß Fig. 2 aus Richtung A von Fig. 2, |
| Fig. 4 | die Spritzgießform ohne maschinenseitige Kupplungshälfte in Draufsicht, |
| Fign. 5, 6 | die auf dem Adaptionstisch befindliche Spritzgießform vor und nach dem Kupplungshub in einer Ansicht entsprechend Fig. 3, |
| Fign. 7, 8 | eine Variante der Spritzgießform in einer Darstellung entsprechend den Fign. 3, 4. |
| Fign. 9, 10 | Ausschnitte aus den Fign. 1 und 2 im Bereich der vertikal geschnittenen Kupplungshälften in vergrösserter Darstellung und |
| Fign. 11, 12 | Schnitte nach Linien XI-XI von XII-XII der Fign. 9 und 10. |

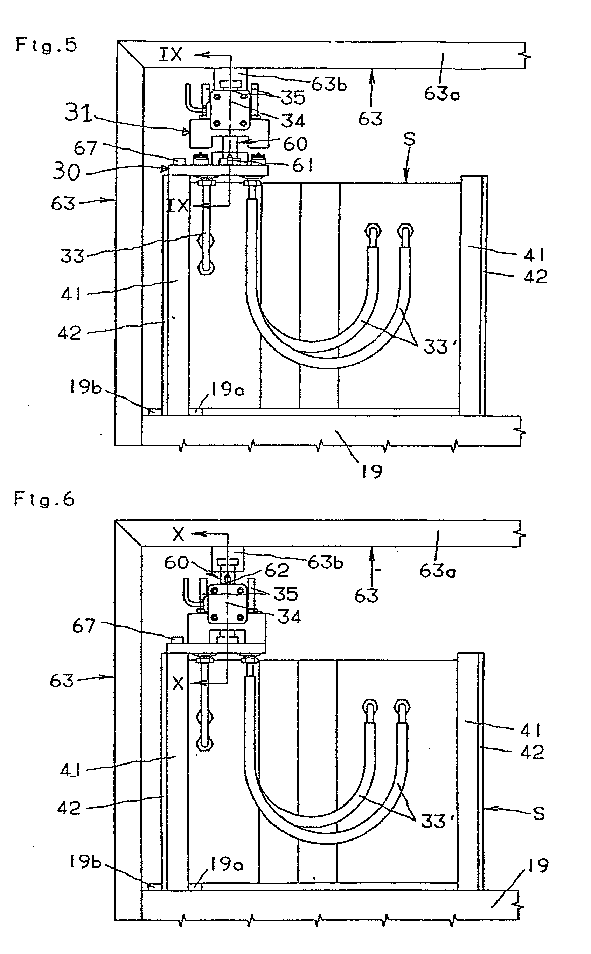

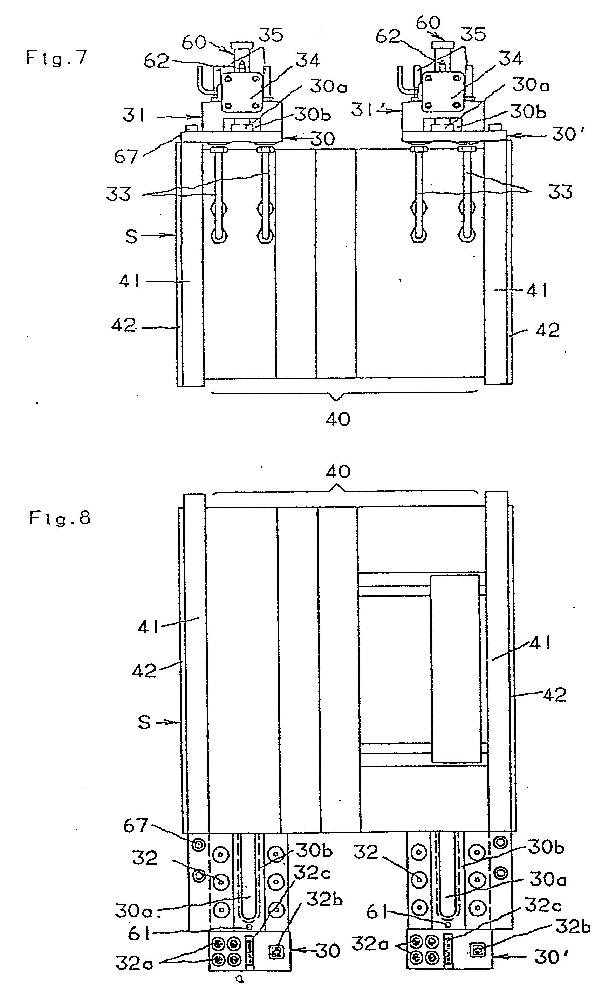

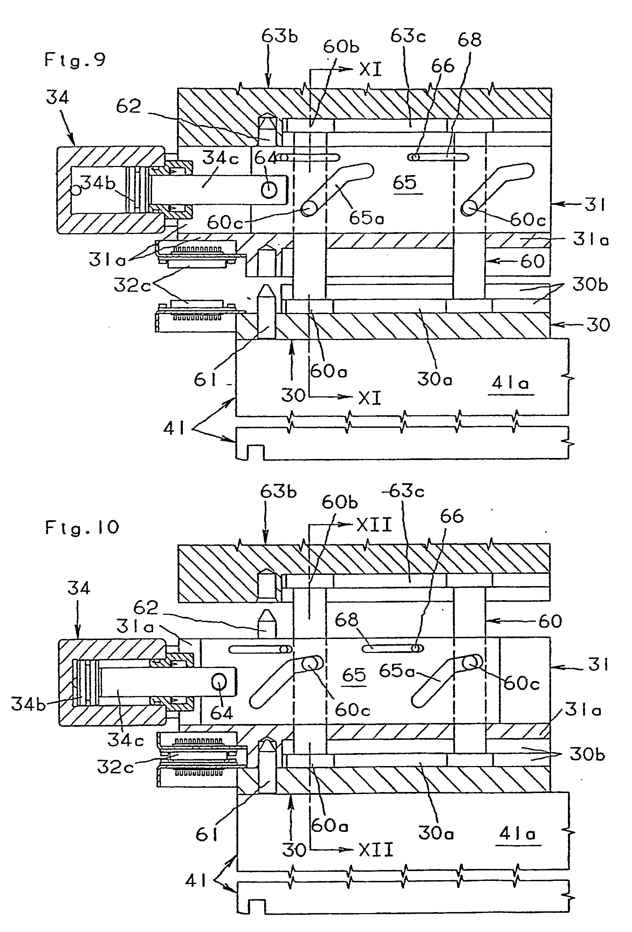

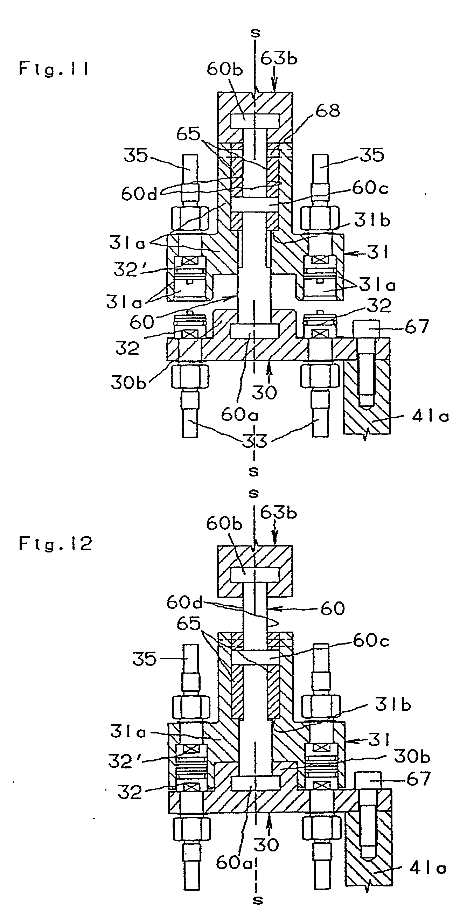

Die mit der formseitigen Kupplungshälfte ausgerüstete Spritzgießform S und die zugehörige automatische Gießformwechselvorrichtung an der Formschließeinheit sind einander funktionell angepaßt. Die die formseitige Kupplungshälfte 30 und eine maschinenseitige Kupplungshälfte 31 umfassende Kupplungseinrichtung einer Versorgungskupplung dient dem automatischen Ankuppeln von flexiblen Versorgungsleitungen für den Spritzbetrieb und für die Vorwärmung (Adaption) der Spritzgießform S auf Betriebstemperatur auf einem Adaptionstisch 19. Charakteristisch für die automatische Gießform-Wechselvorrichtung ist es, daß die Spritzgießform S ohne Abkuppeln der zu und von den Temperiergeräten führenden maschinenseitigen Versorgungsleitungen 35 vom Adaptionstisch 19 horizontal und senkrecht zur Schließrichtung in den Formspannraum in Arbeitsposition transportierbar ist und umgekehrt. Die au der Spritzgießform S befestigte Kupplungshälfte (30 bzw. 30' in Fig. 7, 8) ist vor der hinteren Stirnseite 40f des von Anlageplatten 41 begrenzten Formkörpers 40 der Spritzgießform S angeordnet. Die korrespondierende, zeitweise mit dem Adaptionstisch 19 verbundene maschinenseitige Kupplungshälfte (31 bzw. 31' in Fig. 7, 8) ist oberhalb der Spritzgießform S angeordnet und mit einem Kupplungsantrieb in Form einer Kolben-Zylinder-Einheit 34 für den Kupplungshub der Versorgungskupplung ausgerüstet. Die maschinenseitige Kupplungshälfte 31 bzw. 31' ist beim Kupplungshub an vertikalen Kupplungsbolzen 60 geführt. Die Kupplungsbolzen 60 hintergreifen ein Halteelement 63b des Adaptionstisches 19 und die formseitige Kupplungshälfte 30 bzw. 30' in Abhängigkeit von der Transportbewegung der Spritzgießform S wechselweise, wenn diese Spritzgießform auf den Adaptionstisch wechselweise aus gegensätzlicher Richtung transportiert wird. Die die tischseitige Kupplungshälfte 31 beidseits überragenden Kupplungsbolzen 60 weisen zylindrische Kupplungsköpfe 60b, 60a auf, wie insbesondere aus den Figuren 9-12 ersichtlich. Bei der Transportbewegung der Spritzgießform S sind die oberen Kupplungsköpfe 60b in eine korrespondierende T-Nut 63c des Halteelements 63b des Adaptionstisches 19 und die unteren Kupplungsköpfe 60a in eine T-Nut 30a der formseitigen Kupplungshälfte 30 einfahrbar. Die Kupplungsbolzen 60 und die korrespondierenden T-Nuten 30a, 63c sind symmetrisch zur vertikalen Symmetrieebene s-s der Kupplungshälften 30, 31 bzw. 30', 31' angeordnet. Das mit der T-Nut 63c versehene Halteelement 63b ist am horizontalen Trägerbalken 63a einer Brücke 63 des Adaptionstisches 19 befestigt, wie in Figuren 5, 6 dargestellt. Die untere T-Nut 30a ist in einer T-Nut-Rippe 30b der formseitigen Kupplungshälfte 30 bzw. 30' angeordnet. Diese T-Nut-Rippe ist beidseits von den in Reihe angeordneten Anschlußkupplungen 32; 32' der Adaptionsanschlüsse 30 bzw. 31' flankiert. Die Adaptionsanschlüsse 33 verbinden die am stationären Formträger der Formschließeinheit aufspannbare Formhälfte der Spritzgießform mit der formseitigen Kupplungshälfte 30. Die Adaptionsanschlüsse 33' verbinden die am bewegbaren Formträger aufspannbare Formhälfte mit dieser Kupplungshälfte 30. Wie insbesondere aus den Figuren 11 und 12 erkennbar, entspricht das stufenförmige positive Anlageprofil der formseitigen Kupplungshälfte 30 einem entsprechenden negativen Anlageprofil des Körpers 31a der maschinenseitigen Kupplungshälfte 31.

Die aus den Kupplungshälften 30, 31 bzw. 30', 31' zusammengesetzte Kupplungseinheit einer Versorgungskupplung ist auf der Oberkante einer Anlageplatte 41 mittels Schrauben 67 befestigt und mit der hinteren Stirnseite 40f des Formkörpers 40 sowie mit der Außenfläche der sie aufnehmenden Anlageplatte 41 bündig. Wie aus den Figuren 5 und 6 erkennbar, ist die Spritzgießform auf ihrem Transportweg vom Adaptionstisch 19 in den Formspannraum an Führungsleisten 19a, 19b geführt. Diese Führungsleisten liegen in dem den Formkörper 40 nach unten überragenden Bereich einer Anlageplatte 41 an dieser bzw. an einer Isolierplatte 42 der Anlageplatte 41 an, die mittels Zentrierbolzen 43 am Formkörper 40 befestigt ist.

Als Kupplungsantrieb ist eine hydraulische Kolben-Zylinder-Einheit 34 vorgesehen. Der horizontale Hub dieser Kolben-Zylinder-Einheit 34 ist mittels einer Kurvensteuerung in den vertikalen Kupplungshub umsetzbar. Die Kurvensteuerung umfaßt zwei parallele Steuerleisten 65, die mit der Kolbenstange 34c der Kolben-Zylinder-Einheit 34 über einen Verbindungszapfen 64 verbunden sind. Die planen Innenseiten der Steuerleisten 65 liegen an diametralen Abflachungen 60d der Kupplungsbolzen 60 an. Diese befinden sich stets in gleichem Abstand über der Transportbahn der Spritzgießform S. Die Außenflächen der Steuerleisten 65 liegen an inneren Führungsflächen des Körpers 31a der maschinenseitigen Kupplungshälfte an. Beide Steuerleisten 65 sind mit kongruenten Steuerkurven 65a versehen. In diese tauchen diametrale Steuerzapfen 60c der benachbarten Kupplungsbolzen 60 ein. Beim Kupplungshub der am Körper 31a abgestützten Kolben-Zylinder-Einheit 34 zieht der Kolben 34b über seine Kolbenstange 34c die Steuerleisten 65 aus einer Position gemäß Fig. 9 in eine Position gemäß Fig. 10. Dabei gleiten die Steuerleisten 65 mit ihren unteren Kanten auf horizontalen Schultern 31b des Körpers 31a. Führungszapfen 66 des Körpers 31a ragen in horizontale Langlöcher 68 des Körpers 31a der maschinenseitigen Kupplungshälfte 31 hinein. Sie stellen dadurch sicher, daß keine Relativbewegung zwischen den Steuerleisten 65 und dem Körper 31a in vertikaler Richtung stattfindet. Im Verlauf der Verschiebung der Steuerleisten 65 aus der Position gemäß Fig. 9 in die Position gemäß Fig. 10 erzwingen die stationären Zapfen 60c der Kupplungsbolzen 60 dank der Steuerkurven 65a den vertikalen Kupplungshub der ganzen maschinenseitigen Kupplungshälfte 31.

In diesem Kupplungshub sind die Steuerleisten 65 sowohl an den diametralen Abflachungen 60d als auch an den inneren Führungsflächen des Körpers 31a als auch an den Führungszapfen 66 geführt.

Die Zentrierbolzen 61 der formseitigen Kupplungshälfte 30 bzw. 30' tauchen beim Kupplungshub zur exakten Zentrierung in entsprechende Zentrierbohrungen der maschinenseitigen Kupplungshälfte 31 bzw. 31' ein. Gleichzeitig wird bei diesem Kupplungshub wenigstens ein Zentrierbolzen 62 der maschinenseitigen Kupplungshälfte 31 bzw. 31' aus der Zentrieröffnung des Halteelementes 63b befreit.

Im übrigen weisen die Kupplungshälften 30, 31 bzw. 30', 31' in einem die Anlageplatte nach hinten überragenden Bereich 41a korrespondierende Fühleranschlüsse 32a sowie elektrische Anschlüsse 32b und eine Kodierung 32c auf. An der vorderen Stirnkante derjenigen Anlageplatte 41, die bei in Arbeitsposition befindlicher Spritzgießform S am bewegbaren Formträger anliegt, ist ein Anschlußkörper 36 mit Anschlußkupplungen 37 angeordnet. Diese Anschlußkupplungen korrespondieren mit Anschlußkupplungen eines stationären Anschlußkörpers 38. Über die genannten Anschlußkörper 36, 38 sind Leitungen 39 an die Spritzgießform S anschließbar, welche nicht der Adaption der Spritzgießform dienen (zum Beispiel elektrische Leitungen für Fühler oder Leitungen zur Erfassung bestimmter Zustandsgrößen und/oder hydraulische Anschlüsse zum Bewegen von Kernen oder Schiebern oder zum Antrieb von Ausschraubeinheiten.

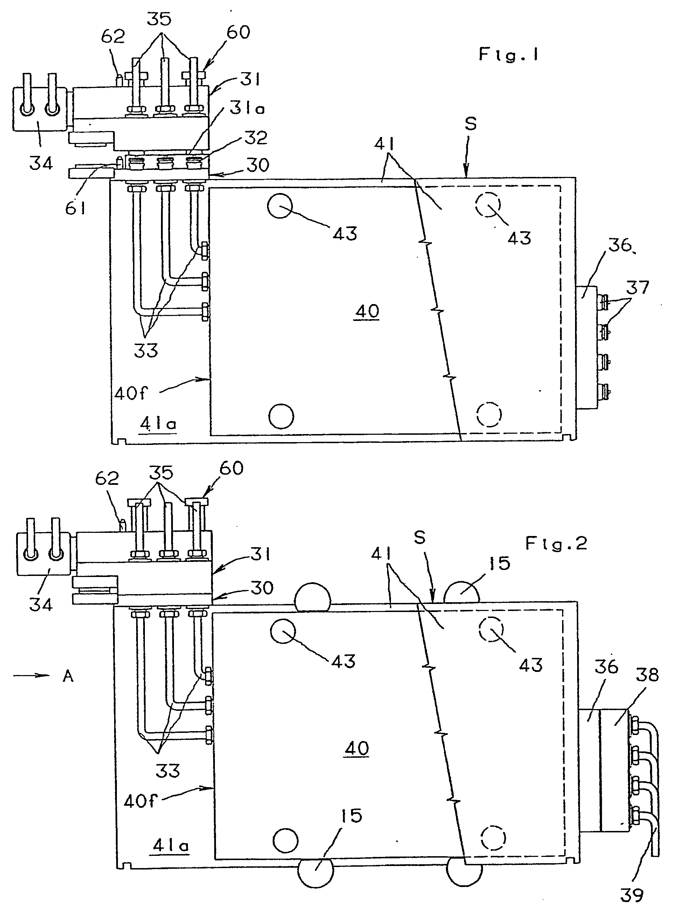

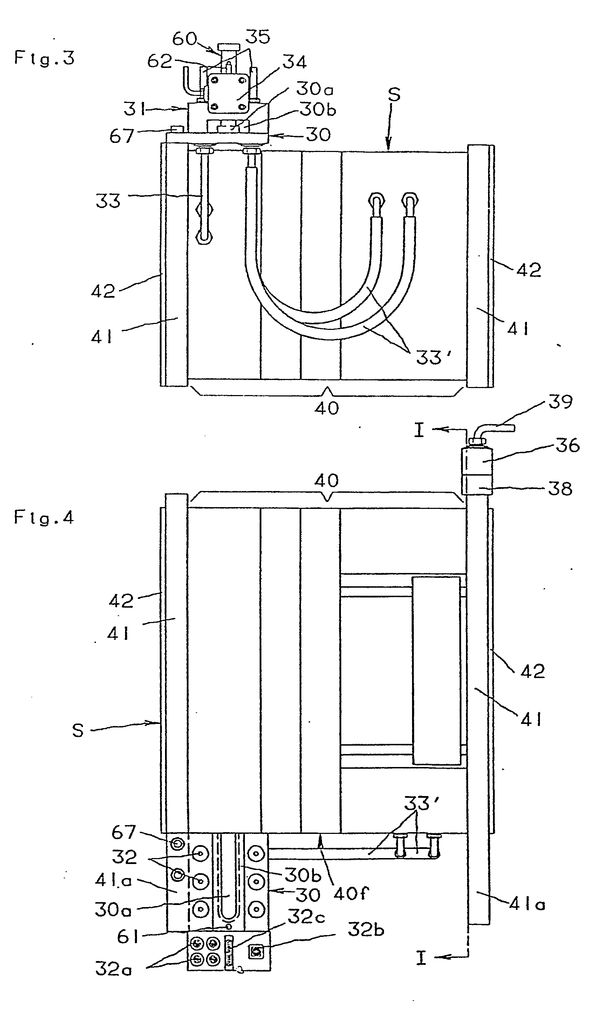

Im Ausführungsbeispiel der Figuren 1-6 sind bei Adaption beide Formhälften der Spritzgießform über eine einzige maschinenseitige Kupplungshälfte 31 und eine zugehörige einzige gießformseitige Kupplungshälfte 30 versorgbar. Beim Ausführungsbeispiel der Figuren 7, 8 ist jeder Gießformhälfte der Spritzgießform eine maschinenseitige Kupplungshälfte 31' und eine gießformseitige Kupplungshälfte 30' zugeordnet. Dementsprechend sind zwei Halteelemente 63b vorgesehen. Bei unterschiedlich langen Spritzgießformen S ist dabei die Kupplungshälfte 30' so an der Anlageplatte 41 befestigt, daß ihre Anschlußkupplungen 32 mit den Anschlußkupplungen 32' in der Vertikalen fluchten, deren Position konstant ist. Beim automatischen Formwechsel wirken Spritzgießform und zugehörige Gießformwechselvorrichtung wie folgt funktionell zusammen: Aus Fig. 2 bzw. aus Fig. 7 ist der Kupplungszustand der Spritzgießform in Arbeitsposition im Formspannraum der Formschließeinheit, also beim Spritzgießen, ersichtlich. Die Spritzgießform S ist über die Kupplungshälften 30, 31 bz. 30', 31'sowie über die Anschlußkörper 36, 38 versorgt.

Die auszuwechselnde Spritzgießform S wird nach Lösen der Spannbolzen 15 aus dem Formspannraum auf den Adaptionstisch 19 transportiert. Bei dieser Transportbewegung werden die Anschlußkörper 36, 36 voneinander getrennt. In der letzten Phase dieser Transportbewegung fahren die Kupplungsköpfe 60b der Kupplungsbolzen 60 der maschinenseitigen Kupplungshälfte 31 bzw. 31' in die T-Nut 63c des Halteelements 63a der Brücke 63 des Adaptionstisches 19 ein. Dadurch ergibt sich eine Position, wie aus den Figuren 6, 10 und 12 ersichtlich. Sodann werden durch einen vom Rechner der Kunststoff-Spritzgießmaschine oder wegabhängig ausgelösten Hub der Kolben-Zylinder-Einheit 34 die Kupplungsköpfe 31, 30 bzw. 31' 30' voneinander gelöst. Dadurch ergibt sich eine Position wie aus den Figuren 5,9, 11 ersichtlich. In dieser Position ist die maschinenseitige Kupplungshälfte 31; 31' am Halteelement 63b mit Hilfe des Zentrierzapfens 62 zentriert.

Im Zuge einer weiteren senkrecht zur Schließrichtung der Formschließeinheit verlaufenden horizontalen Transportbewegung wird die Spritzgießform S mit ihrer formseitigen Kupplungshälfte 30 bzw. ihrer formseitigen Kupplungshälfte 30' auf einen (zeichnerisch nicht dargestellten) Transporttisch verschoben und mit diesem in das Gießform-Depot abtransportiert. Die maschinenseitige Kupplungshälfte 31 bzw. die maschinenseitige Kupplungshälften 31' verbleiben am Halteelement 63b des Adaptionstisches 19. Die einzuwechselnde Spritzgießform gelangt in einem gegensätzlichen Transportweg vom Spritzgießformen-Depot über den Transporttisch und den Adaptionstisch 19 in den Formspannraum in Arbeitsposition. Bei der Transportbewegung der Spritzgießform vom Transporttisch auf den Adaptionstisch 19 wird die T-Nut 63c der gießformseitigen Kupplungshälfte 30 bzw. 30' über die unteren Kupplungköpfe 30a der maschinenseitigen Kupplungshälfte 31 bzw. 31' gefahren, der am Halteelement 63b hängt.

Dadurch ergibt sich eine Position wie aus den Figuren 5 bzw. 10 bzw. 12 ersichtlich. Durch einen Kupplungshub werden nunmehr die Kupplungshälflten 30, 31 bzw. 30', 31' in gegenseitige Anlage gebracht,also in eine Position gemäß den Figuren 6, 10, 12 überführt, in welcher die Spritzgießform an alle zur Adaption erforderlichen Versorgungsleitungen angeschlossen ist. Danach wird die Spritzgießform adaptiert, was einen mehr oder weniger langen Zeitraum in Anspruch nehmen kann. In diesem Zusammenhang ist darauf hinzuweisen, daß die Adaption in aller Regel bereits durchgeführt wird, während noch die auszuwechselnde Spritzgießform im Formspannraum sich beim Spritzgießen befindet. Ein solches zeitsparendes Verfahren ist dadurch möglich, daß der Adaptionstisch 19 mit zwei Stellplätzen versehen und in Schließrichtung der Formschließeinheit verschiebbar ist. Dadurch kann die auszuwechselnde Spritzgießform über den zweiten Stellplatz des Adaptionstisches 19 auf den Transporttisch gelangen (wie bereits oben beschrieben), während eine einzuwechselnde Spritzgießform auf dem ersten Stellplatz adaptiert wird.

Nach beendigter Adaption wird die Spritzgießform mit beiden Kupplungshälften 30, 31 bzw. 30', 31' in Arbeitsposition in den Formspannraum überführt, wobei die Kupplungsköpfe 60b der maschinenseitigen Kupplungshälfte 31 bzw. 31' aus der T-Nut 63 des Halteelementes 63c herausgefahren werden. In der letzten Phase der Einfahrbewegung in den Formspannraum gelangen die Anschlußkörper 36, 38 in gegenseitige Anlage. Dadurch sind die Versorgungsleitungen 39, welche nicht der Adaption dienen, sondern ausschließlich während des Spritzgießens erforderlich sind, an die Spritzgießform angeschlossen.

Abschließend ist darauf hinzuweisen, daß ein Ausfall des Kupplungsantriebes, insbesondere der hydraulischen Antriebskraft der Kolben-Zylinder-Einheit 34 nicht zu einer Lösung der gegenseitigen Anlage der Kupplungshälften 31, 30 bzw. 31', 30' führen kann. Denn die identischen Steuerkurven 65a in den Steuerleisten 65 weisen je einen oberen Endabschnitt von derart geringem Steigungswinkel auf, daß in Kupplungsposition (Fig. 10) eine Selbsthemmung der Steuerzapfen 60c in ihren zugehörigen Steuerkurven 65a gewährleistet ist. Die dadurch erforderliche größere Lösekraft beim Lösen der Kupplung ist durch eine entsprechende Ausbildung des Kolbens 34b der Kolben-Zylinder-Einheit 34 bereitgestellt. Dieser Kolben 34b ist nämlich beim Lösunghub mit einer größeren Kolbenfläche beaufschlagbar als beim Kupplungshub.

## Ansprüche

1. Formschließeinheit mit einer Gießformwechselvorrichtung, einem Adaptionstisch und einer Versorgungskupplung mit längs einer horizontalen Trennebene trennbaren Kupplungshälften zum Ankuppeln von flexiblen Versorgungsleitungen einer Kunststoff-Spritzgießform an maschinenseitige Versorgungsleitungen der Formschließeinheit zwecks Vorwärmung (Adaption) der Spritzgießform auf dem Adaptionstisch, von welchem die Spritzgießform ohne Abnahme der Versorgungsleitungen horizontal und senkrecht zur Schließrichtung der Formschließeinheit in ihre Arbeitsposition im Formspannraum der Formschließeinheit transportierbar ist, mit einer festen Anordnung der formseitigen Kupplungshälfte vor der hinteren, dem Formspannraum abgewandten Stirnseite des von Anlageplatten begrenzten Formkörpers der Spritzgießform und mit einer zwischen dem Adaptionstisch und dem Formspannraum bewegbaren Anordnung der maschinenseitigen Kupplungshälfte, dadurch gekennzeichnet, daß die oberhalb der Spritzgießform (S) angeordnete maschinenseitige Kupplungshälfte (31;31') mit einem Kupplungsantrieb für den Kupplungshub der Versorgungskupplung ausgerüstet und beim Kupplungshub an vertikalen Kupplungsbolzen (60) geführt ist, welche ein Halteelement (63b) des Adaptionstisches (19) und die gießformseitige Kupplungshälfte (30,30') in Abhängigkeit von der Transportbewegung der Spritzgießform (S) wechselweise hintergreifen.

2. Formschließeinheit nach Patentanspruch 1, dadurch gekennzeichnet, daß die die maschinenseitige Kupplungshälfte (31) beidseits überragenden Kupplungsbolzen (60) an ihren beiden Enden Kupplungsköpfe (60b,60a) aufweisen und daß bei der Transportbewegung der Spritzgießform (S) die oberen Kupplungsköpfe (60b) in eine korrespondierende T-Nut (63c) des Halteelementes (63b) des Adaptionstisches (19) und die unteren Kupplungsköpfe (60a) in eine T-Nut (30a) der formseitigen Kupplungshälfte (30) einfahrbar sind.

3. Formschließeinheit nach Patentanspruch 1 oder 2, dadurch gekennzeichnet, daß die Kupplungsbolzen (60) und die korrespondierenden T-Nuten (30a,63c) symmetrisch zur vertikalen Symmetrieebene (s-s) der Kupplungshälften (30,31) angeordnet sind.

4. Formschließeinheit nach einem der Patentansprüche 1-3, dadurch gekennzeichnet, daß das mit der T-Nut (63c) versehene Halteelement (63b) am horizontalen Trägerbalken (63a) einer Brücke (63) des Adaptionstisches (19) befestigt ist.

5. Formschließeinheit nach einem der vorhergehenden Patentansprüche, dadurch gekennzeichnet, daß die untere T-Nut (30a) in einer T-Nut-Rippe (30b) der formseitigen Kupplungshälfte (30) angeordnet und diese T-Nut-Rippe beidseits von den in Reihe angeordneten einzelnen Anschlußkupplungen (32,32') der Adaptionsanschlüsse (33,33') flankiert ist.

6. Formschließeinheit nach Patentanspruch 5, dadurch gekennzeichnet, daß das negative Kupplungsprofil des Körpers (31a) der maschinenseitigen Kupplungshälfte (31) einem positiven Kupplungsprofil der formseitigen Kupplungshälfte (30) entspricht.

7. Formschließeinheit nach einem der vorhergehenden Patentansprüche, dadurch gekennzeichnet, daß die aus den beiden Kupplungshälften (30,31) zusammengesetzte Versorgungskupplung (Fig. 2) auf der Oberkante einer Anlageplatte (41) Spritzgießform (S) aufsitzt und mit der hinteren Stirnseite (40f) des Formkörpers (40) der Spritzgießform (S) sowie mit der Außenfläche der Anlageplatte (41) bündig ist.

8. Formschließeinheit nach einem der vorhergehenden Patentansprüche, dadurch gekennzeichnet, daß als Kupplungsantrieb eine hydraulische Kolben-Zylinder-Einheit (34) vorgesehen ist, deren horizontaler Hub mittels einer Kurvensteuerung in den vertikalen Kupplungshub umsetzbar ist.

9. Formschließeinheit nach Patentanspruch 8, dadurch gekennzeichnet, daß die Kurvensteuerung mit der Kolbenstange (34c) der Kolben-Zylinder-Einheit (34) verbundene Steuerleisten (65) umfaßt, in deren Steuerkurven (65a) Steuerzapfen (60c) der Kupplungsbolzen (60) eintauchen.

10. Formschließeinheit nach Patentanspruch 8 oder 9, dadurch gekennzeichnet, daß Steuerleisten (65) der Kurvensteuerung an diametralen Abflachungen (60d) der stets in gleichem Abstand über der Transportbahn der Spritzgießform (S) angeordneten Kupplungsbolzen (60) sowie an inneren Führungsflächen und mittels Langlöchern (68) an Führungszapfen (66) des Körpers (31a) geführt sind.

11. Formschließeinheit nach einem der Patentansprüche 8-10 dadurch gekennzeichnet, daß die identischen Steuerkurven (65) je einen oberen Endabschnitt von derart geringem Steigungswinkel aufweisen, daß in Kupplungsposition (Fig. 10) eine Selbsthemmung der Steuerzapfen (60c) in ihren zugehörigen Steuerkurven (65a) gewährleistet ist.

12. Formschließeinheit nach einem der Patentansprüche 8-11, dadurch gekennzeichnet, daß der Kolben (34b) der Kolben-Zylinder-Einheit (34) beim Kupplungshub mit geringerer Kolbenfläche beaufschlagbar ist als beim Lösungshub.

## Claims

1. Mould-closing unit with an injection-mould-exchanging apparatus, a conditioning table and a supply coupling with coupling halves, which are separable along a horizontal parting plane, for coupling of flexible supply lines of a synthetic material injection mould to machine-side supply lines of the mould-closing unit for the purpose of pre-heating (conditioning) the injection mould on the conditioning table, from where the injection mould is transportable without removal of the supply lines horizontally and vertically to the closing direction of the mould-closing unit into its operative position in the mould-clamping area of the mould-closing unit, with a fixed arrangement of the mould-side coupling half in front of the rear-end side of the mould body, which is facing away from the mould-clamping area and defined by the abutment plates, of the injection mould, and with the machine-side coupling half being arranged to be movable between the conditioning table and the mould-clamping area, **characterised in that** the machine-side coupling half (31;31'), which is arranged above the injection mould (S), is provided with a coupling drive for the coupling stroke of the supply coupling, and which is guided during the coupling stroke by vertical coupling pins (60), which alternately reach behind a holding means (63b) of the conditioning table (19) and the injection-mould-side coupling half (30,30') in dependence on the transport movement of the injection mould (S).

2. Mould-closing unit according to patent claim 1, **characterised in that** the coupling pins (60), which extend on both sides beyond the machine-side coupling half (31), have coupling heads (60,60a) at their two ends, and in that during the transport movement of the injection mould the upper coupling heads (60b) are driven into a corresponding T-groove (63c) of the holding means (63b) of the conditioning table (19), and the lower coupling heads (60a) are driven into a T-groove (30a) of the mould-side coupling half (30).

3. Mould-closing unit according to patent claim 1 or 2, **characterised in that** the coupling pins (60) and the corresponding T-grooves (30a,63c) are arranged symmetrically to the vertical symmetry plane (s-s) of the coupling halves (30,31).

4. Mould-closing unit according to one of the patent claims 1 - 3, **characterised in that** the holding means (63b) including the T-groove (63c) is mounted to the horizontal holding element (63a) of a bridge (63) of the conditioning table (19).

5. Mould-closing unit according to one of the above patent claims, **characterised in that** the lower T-groove (30a) is arranged in a T-groove rib (30b) of the mould-side coupling half (30), and said T-groove rib is flanked on both sides by individual line terminals (32,32'), arranged in series, of the conditioning connections (33,33').

6. Mould-closing unit according to patent claim 5, **characterised in that** the negative coupling profile of the body (31a) of the machine-side coupling half (31) corresponds to a positive coupling profile of the mould-side coupling half (30).

7. Mould-closing unit according to one of the above patent claims, **characterised in that** the supply coupling (Fig. 2), composed of the two coupling halves (30,31), rests on the top edge of an abutment plate (41) injection mould (S) and is flush with both the rear face-side (40f) of the mould body (40) of the injection mould (S) and the outside surface of the abutment plate (41).

8. Mould-closing unit according to one of the above patent claims, **characterised in that** the coupling is driven by a hydraulic piston-cylinder unit (34), the horizontal stroke of which is convertible into a vertical coupling stroke by means of a cam control.

9. Mould-closing unit according to patent claim 8, **characterised in that** the cam control includes cam tracks, which are connected to the piston rod (34c) of the piston-cylinder unit (34), with follower pins (60c) of the coupling pins (60) engaging into its cam curves (65a).

10. Mould-closing unit according to patent claim 8 or 9, **characterised in that** the cam tracks (65) of the cam control are guided both on diametrically flattened areas (60d) of the coupling pins (60), which are always arranged at the same distance above the transport path of the injection mould (S), and on inner guide surfaces and by means of elongate holes (68) on guide pins (66) of the body (31a).

11. Mould-closing unit according to one of patent claims 8-10, **characterised in that** the identical control curves (65) have each one upper end section of such small angle of inclination that selflocking of the control pins (60c) in their respective cam curves (65a) whilst in the coupling position (Fig. 10) is guaranteed.

12. Mould-closing unit according to one of patent claims 8-11, **characterised in that** the piston (34b) of the piston-cylinder unit (34) is loaded by a lesser piston surface during the coupling stroke than during the uncoupling stroke.

## Revendications

1. Unité de fermeture de moule comprenant un dispositif de changement de moule, une table d'adaptation et un accouplement d'alimentation comportant deux moitiés d'accouplement qui peuvent être séparées le long d'un plan de séparation horizontal et qui sont destinées à l'accouplement de conduites flexibles d'alimentation d'un moule de moulage par injection de matière plastique à des conduites d'alimentation, situées du côté de la machine, de l'unité de fermeture de moule, à des fins de préchauffage (adaptation) du moule de moulage par injection sur la table d'adaptation depuis laquelle le moule de moulage par injection peut être transporté, sans enlèvement des conduites d'alimentation, horizontalement et perpendiculairement à la direction de fermeture de l'unité de fermeture de moule, dans sa position de travail dans l'espace de serrage de l'unité de fermeture de moule,
avec une disposition fixe de la moitié d'accouplement située du côté du moule devant le côté frontal arrière, opposé à l'espace de serrage du moule, du corps de moule du moule de moulage par injection qui est délimité par des plaques d'appui, et avec une disposition de la moitié d'accouplement située du côté de la machine qui est mobile entre la table d'adaptation et l'espace de serrage,
caractérisée par le fait que la moitié d'accouplement (31 ; 31') qui est située du côté de la machine et qui est disposée au-dessus du moule de moulage par injection (S) est équipée d'un entraînement d'accouplement destiné à la course d'accouplement de l'accouplement d'alimentation, et que, lors de la course d'accouplement, il est guidé sur des goujons d'accouplement verticaux (60) qui saisissent alternativement par l'arrière, en fonction du déplacement de transport du moule de moulage par injection (S), un élément de retenue (63b) de la table d'adaptation (19) et la moitié d'accouplement (30, 30') qui est située du côté du moule.

2. Unité de fermeture de moule selon la revendication 1, caractérisée par le fait que les goujons d'accouplement (60) qui font saillie des deux côtés au-delà de la moitié d'accouplement (31) située du côté de la machine présentent à leurs deux extrémités des têtes d'accouplement (60b, 60a), et par le fait que, lors du déplacement de transport du moule de moulage par injection (S), les têtes d'accouplement supérieures (60b) peuvent être introduites dans une rainure en T correspondante (63c) de l'élément de retenue (63b) de la table d'adaptation (19), et que les têtes d'accouplement inférieures (60a) peuvent l'être dans une rainure en T (30a) de la moitié d'accouplement (30) qui est située du côté du moule.

3. Unité de fermeture de moule selon la revendication 1 ou 2, caractérisée par le fait que les goujons d'accouplement (60) et les rainures en T correspondantes (30a, 63c) sont disposées symétriquement par rapport au plan de symétrie vertical (s-s) des moitiés d'accouplement (30, 31).

4. Unité de fermeture de moule selon l'une des revendications 1 à 3, caractérisée par le fait que l'élément de retenue (63b) qui est muni de la rainure en T (63c) est fixé sur la poutre porteuse horizontale (63a) d'un pont (63) de la table d'adaptation (19).

5. Unité de fermeture de moule selon l'une des revendications précédentes, caractérisée par le fait que la rainure en T inférieure (30a) est disposée dans une nervure en T (30b) de la moitié d'accouplement (30) qui est située du côté du moule, et que cette et à nervure en T est flanquée, sur les deux côtés, des accouplements de raccordement individuels (32, 32') disposés en série des raccordements d'adaptation (33, 33').

6. Unité de fermeture de moule selon la revendication 5, caractérisée par le fait que le profil d'accouplement négatif du corps (31a) de la moitié d'accouplement (31) qui est située du côté de la machine correspond à un profil d'accouplement positif de la moitié d'accouplement (30) qui est située du côté du moule.

7. Unité de fermeture de moule selon l'une des revendications précédentes, caractérisée par le fait que l'accouplement d'alimentation (figure 2) composé des deux moitiés d'accouplement (30, 31) repose sur le bord supérieur d'une plaque d'appui (41) du moule de moulage par injection (S), et qu'il est aligné sur le côté frontal arrière (40f) du corps de moule (40) du moule de moulage par injection (S), ainsi que sur la surface extérieure de la plaque d'appui (41).

8. Unité de fermeture de moule selon l'une des revendications précédentes, caractérisée par le fait qu'il est prévu comme entraînement d'accouplement une unité hydraulique piston-cylindre (34) dont la course horizontale est transformée en la course verticale d'accouplement au moyen d'une commande à cames.

9. Unité de fermeture de moule selon la revendication 8, caractérisée par le fait que la commande à cames comprend des barres de commande (65) qui sont reliées à la tige de piston (34c) de l'unité piston-cylindre (34), et dans les cames de commande (65a) desquelles pénètrent des goujons de commande (60c) des goujons d'accouplement (60).

10. Unité de fermeture de moule selon la revendication 8 ou 9, caractérisée par le fait que les barres de commande (65) de la commande à cames sont guidées sur des méplats (60d) diamétralement opposés des goujons d'accouplement (60) qui sont toujours disposés à la même distance sur tout le trajet de transport du moule de moulage par injection (S), ainsi que sur des surfaces de guidage intérieures et, au moyen de trous allongés (68), sur des goujons de guidage (66) du corps (31a).

11. Unité de fermeture de moule selon l'une des revendications 8 à 10, caractérisée par le fait que les cames de commande (65), identiques entre elles, présentent chacune une section d'extrémité supérieure dont l'angle de pente est suffisamment faible pour que soit assuré, dans la position d'accouplement (figure 10), un blocage automatique des goujons de commande (60c) dans leurs cames de commande associées (65a).

12. Unité de fermeture de moule selon l'une des revendications 8 à 11, caractérisée par le fait que, lors de la course d'accouplement, le piston (34b) de l'unité piston-cylindre (34) est actionné avec une surface de piston supérieure à celle qui est présente lors de la course de dégagement.

Fig.1

Fig.2

Fig.3

Fig.4

Fig.5

Fig.6

Ftg.7

Ftg.8

Fig.9

Fig.10

Fig.11

Fig.12